# EUROPÄISCHE PATENTSCHRIFT

(11) **EP 2 539 052 B1**
(45) Veröffentlichungstag und Bekanntmachung des Hinweises auf die Patenterteilung: **26.07.2017**
(21) Anmeldenummer: 11704959.3
(22) Anmeldetag: 11.02.2011
(51) Int. Cl.: B01D 63/02, B01D 63/06, B01D 65/00

(54) **VERFAHREN ZUM HERSTELLEN EINES MEMBRANMODULS SOWIE MEMBRANMODUL**
METHOD FOR PRODUCING A MEMBRANE MODULE AND MEMBRANE MODULE
PROCÉDÉ DE FABRICATION D'UN MODULE MEMBRANAIRE ET MODULE MEMBRANAIRE

(30) Priorität: 22.04.2010 DE 202010005971 U; 22.02.2010 DE 102010008869
(43) Veröffentlichungstag der Anmeldung: 02.01.2013
(73) Patentinhaber: Nanostone Water GmbH, 38820 Halberstadt (DE)
(72) Erfinder: GOEBBERT, Christian, 63863 Eschau (DE); VOLZ, Manfred, 66352 Großesseln (DE)
(74) Vertreter: DREISS Patentanwälte PartG mbB
(86) Internationale Anmeldenummer: PCT/EP2011/052074
(87) Internationale Veröffentlichungsnummer: WO 2011/101295

(56) Entgegenhaltungen:
- EP-A1- 0 385 089
- EP-A1- 1 060 784
- EP-A2- 1 374 979
- WO-A1-00/50156
- WO-A1-02/076591
- WO-A1-2010/015374
- DE-T2- 60 024 966
- US-A1- 2004 035 786
- US-A1- 2007 144 716
- US-A1- 2008 035 270

## Beschreibung

Die Erfindung betrifft ein Filtermembranmodul nach dem Oberbegriff des Anspruchs 1.

Ein solches Membranmodul umfasst ein langgestrecktes Filterelement, das von wenigstens einem Längskanal durchzogen ist und aus einem porösen Werkstoff besteht, beispielsweise aus Keramik. Das Modul umfasst ferner ein Gehäuse, das das Filterelement umgibt und mit diesem einen Sammelraum bildet.

Ein solches Modul arbeitet wie folgt: In das eine Ende eines jeden Längskanals wird das zu behandelnde Medium eingeführt, das sogenannte Unfiltrat. Auf dem Wege des Unfiltrates tritt Filtrat durch die Wandfläche des Längskanals sowie durch das poröse Material des Filterelementes hindurch, gelangt in den genannten Sammelraum zwischen Filterelement und Gehäuse und wird von dort als Filtrat abgeführt. Das Unfiltrat tritt am anderen Ende der Längskanäle aus und wird gegebenenfalls rückgeführt zum erstgenannten Ende des Längskanales, um somit einen Kreislauf zu bilden. Die Wandflächen der Längskanäle sind mit einem Material beschichtet, das ebenfalls in bestimmtem Maße durchlässig ist. Diese meist sehr dünne Schicht bildet meist die eigentliche Filtrationseinrichtung.

Ein einziges Filterelement weist eine Mehrzahl von Längskanälen auf (Multikanal-Element). Mehrere solcher Multikanal-Elemente werden zusammenzufasst und daraus ein Membranmodul gebildet.

Am stirnseitigen Ende der Filterelemente befindet sich eine stirnseitige Platte. Diese begrenzt den Ringraum zwischen dem Gehäuse und den Filterelementen, und zwar derart, dass der Ringraum gegen die äußere Umgebung dicht ist, wenigstens flüssigkeitsdicht. Das Abdichten kann problematisch sein, da während des Betriebes unterschiedliche Temperaturen herrschen, die zu Expansion und Kontraktion von Bauteilen führen, und zwar in unterschiedlicher Weise. Die stirnseitigen Begrenzungsplatten können beispielsweise aus Edelstahl bestehen.

Ausführungsbeispiele sind bekannt geworden aus EP 0 270 051 B1 sowie aus DE 690 19 552 T2. EP 1 374 979 A2 beschreibt ein Filtermembranmodul mit einer Vielzahl spaghettiartiger einzelner Filterkapillaren, die am Ende mit einer Gießmasse gebündelt werden. DE 600 24 966 T2 offenbart eine thermoplastische Filterkartusche mit mehreren konzentrischen Filterrohren. US 2008/0035270 A1 betrifft ein Filtermembranmodul mit einer Vielzahl von Fasern, deren Enden durch Umgießen gebündelt werden. US 2007/0144716 A1 beschreibt eine Vorrichtung mit porösen Membranen, deren Enden durch Gießen einstückig zusammengefügt werden.

WO 2010/015374 A1 offenbart eine filtriert Einheit zur Aufbereitung von Wasser und anderen flüssigen Medien mit Flachmembranen, die einen rechteckigen Querschnitt aufweisen und alle identisch ausgebildet sind. EP 1 060 784 A1 beschreibt einen mit einer Mehrzahl von Filterelementen, die einen quadratischen oder hexagonalen Querschnitt aufweisen. WO00/50156 und US2004/0035786 offenbaren Strukturen aus einzelnen Monolithsegmenten. Der Erfindung liegt die Aufgabe zugrunde, ein Filtermembranmodul mit hoher Filterleitung und einfacher und somit preiswerter Herstellung zu schaffen.

Diese Aufgabe wird durch die Merkmale der unabhängigen Ansprüche gelöst.

Ein grundlegender Gedanke der Erfindung besteht darin, dass auf den Endbereich der Filterelemente ein Gießmaterial aus Kunststoff aufgebracht wird, beispielsweise ein thermoplastischer Kunststoff, insbesondere ein Polymer. Der Kunststoff sperrt somit die Zwischenräume zwischen den Filterelementen ab. Er bildet einen Montagering, der - wiederum im Endbereich der Filterelemente - diese umgibt. Der Ausdruck "Kunststoff" ist im weitesten Sinne zu verstehen. So kommen beispielsweise auch Duroplaste oder Zwei-Komponenten-Kunststoffe wie Epoxide oder Acrylate in Betracht.

Dieses Verfahren wird an den beiden Enden des Bündels von Filterelementen durchgeführt, so dass zwei Montageringe entstehen. Sodann wird das Gehäuse auf die beiden Montageringe und damit auf das Filterelement-Bündel aufgeschoben.

Bei dem erfindungsgemäßen Multikanal-Element wird ein Montagering zunächst an einem Ende, und sodann am anderen Ende des Filterelementes aufgebracht, wiederum aus einem Kunststoffgießmaterial bestehend. Nach dem Aufbringen wird in beiden Fällen das Kunststoffgießmaterial aushärten gelassen. Gleiches wird am anderen Ende vorgenommen. Sodann wird wiederum das Gehäuse auf die beiden Montageringe aufgeschoben.

Flachmembranen können preiswert hergestellt werden. Durch die zwischen den Filterelementen gebildeten flachen und breiten Zwischenräume kann das Filtrat sehr effizient abgeleitet werden.

Das Gehäuse kann aus demselben Material gebildet werden wie die Montageringe. Das Gehäuse kann sogar mit einem der beiden Montageringe einteilig sein, und zwar durch Herstellen in einem einzigen Gussvorgang.

Ein bekanntes Problem bei Filtereinrichtungen der genannten Bauart mit Keramik-Filterelementen besteht in der unterschiedlich starken Ausdehnung bei Wärmeeinwirkung. Das Problem tritt immer auf, wenn Materialien unterschiedlicher Wärmeausdehnungskoeffizienten verwendet werden.

Deshalb empfiehlt es sich, die Lagerung des Gehäuses wenigstens auf einem der Montageringe als Loslager auszubilden, so dass es nicht zu unzulässigen Wärmespannungen zwischen dem Keramikteil und dem Gehäuse kommt.

Das Gehäuse kann mit Anschlüssen zum Zuführen oder Abführen von Medium versehen sein, zum Beispiel für das zu behandelnde Medium (sogenanntes Unfiltrat) oder für das behandelte Medium (Filtrat). Ist das Gehäuse aus thermoplastischem Material hergestellt, so bietet es sich an, die Anschlussstutzen anzugießen.

Die Erfindung ist anhand der Zeichnung näher erläutert. Darin ist im Einzelnen Folgendes dargestellt:
Figur 1 zeigt in perspektivischer Darstellung eine einzelne Hohlfaser aus Keramik (Spaghetti).
Figur 2 zeigt in einem achssenkrechten Querschnitt drei zu einem Bündel zusammengefasste Spaghetti.
Figur 3 zeigt ein Bündel von Spaghetti, umschlossen von einer Manschette.
Figur 4 zeigt in schematischer Darstellung den Gegenstand von Figur 3, mit dem einen Ende eingetaucht in eine Wanne, die ein Gießmaterial enthält.
Figur 5 zeigt das Bündel mit Manschette gemäß Figur 3 nach dem Aushärten des Gießmaterials.
Figur 6 zeigt den Endbereich eines Multikanal-Elementes in perspektivischer Darstellung.
Figur 7 zeigt den Gegenstand von Figur 6, versehen mit einem Montagering.
Figur 8 zeigt eine komplette Filtereinrichtung in Aufrissansicht und teilweise weggeschnitten, umfassend mehrere Filterelemente in einem Gehäuse.
Figur 9 zeigt eine weitere Filtrationsvorrichtung im Aufriss und teilweise weggeschnitten.
Figur 10 zeigt die Vorrichtung gemäß Figur 9 in einer Draufsicht.
Figur 11 zeigt eine Ausführungsform einer erfindungsgemäßen Filtereinrichtung im Querschnitt mit fünf Flachmembranen.

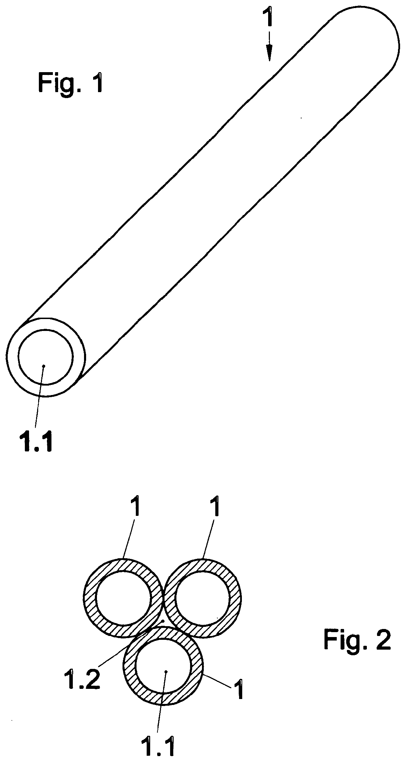

Ein in Figur 1 gezeigtes Spaghetti-Element 1 besteht aus Keramik. Es umschließt einen Längskanal 1.1. Das in Figur 2 gezeigte Spaghetti-Bündel umfasst drei Spaghetti 1, jeweils mit einem Längskanal 1.1. Die drei Spaghetti schließen einen Hohlraum 1.2 zwischen sich ein.

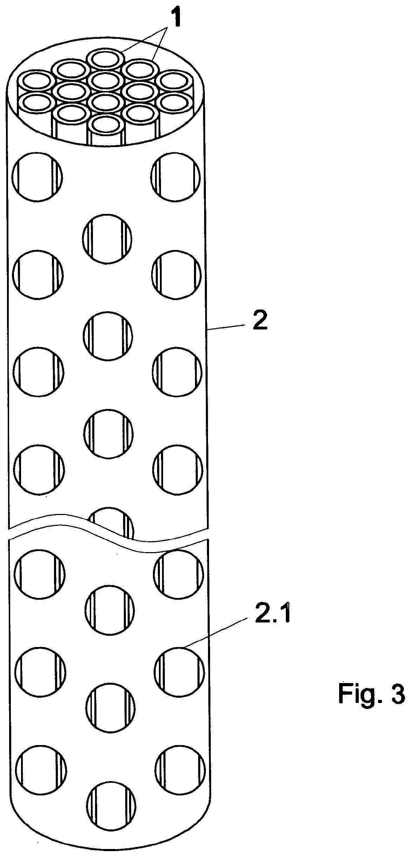

Figur 3 zeigt ein Bündel von Spaghetti 1, umschlossen von einer Manschette 2. Die Manschette 2 weist mehrere Durchbrüche 2.1 auf, so dass zwischen den Hohlräumen 1.2, der sich jeweils zwischen einander benachbarten Spaghetti 1 befindet, und der äußeren Umgebung, eine leitende Verbindung besteht.

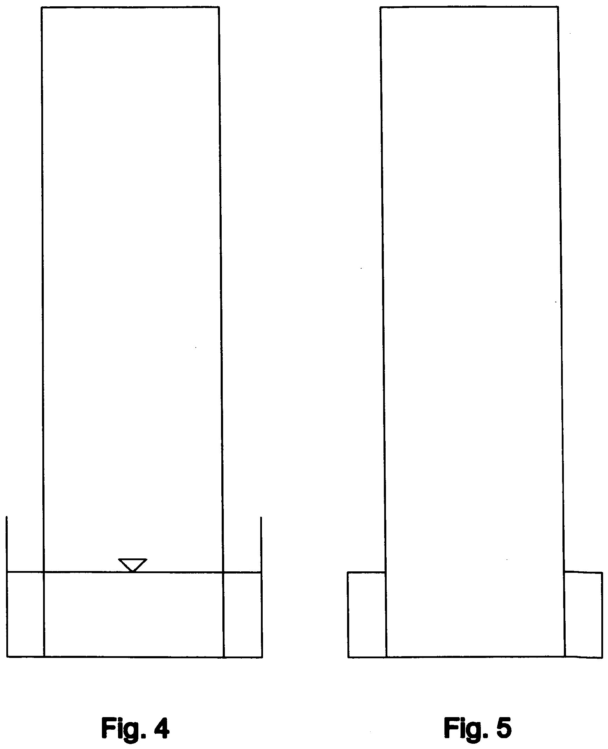

Figur 4 veranschaulicht schematisch das Aufbringen eines Montageringes 3 - siehe auch Figur 5. Zu diesem Zweck wird der Gegenstand von Figur 3 mit seinem einen Ende in ein Gießmaterial 4 getaucht, das sich in einer Wanne 5 befindet. Das Gießmaterial 4 besteht aus Kunststoff, beispielsweise aus einem thermoplastischen Material, oder aus Kunstharz. Das Gießmaterial dringt nach dem Eintauchen des Gegenstandes von Figur 3 durch die Durchbrechungen 2.1 in die Hohlräume 1.2 in den Spaghetti 1 ein und füllt diese aus. Nach dem Aushärten des Gießmaterials ergibt sich der in Figur 5 gezeigte Gegenstand, somit das von der Manschette 2 umschlossene Spaghetti-Bündel mit dem Montagering 3.

Für den Filtrationsprozess ist es notwendig, dass die Längskanäle 1.1 offen bleiben. Dies lässt sich auf verschiedene Weise erreichen. Ist die untere Stirnfläche des Bündels absolut eben und bündig mit dem Boden von Wanne 5, so kann vermieden werden, dass Gießmaterial in die Längskanäle 1.1 eindringt. Weiterhin könnten die Enden der Längskanäle 1.1 mit Stopfen versehen werden, was aber mühsam und aufwändig ist. Schließlich kann das Bündel nach dem Erreichen des Zustandes gemäß Figur 5 an seinem unteren Ende um ein gewünschtes Stück durch Abschneiden gekürzt werden, da das Gießmaterial aufgrund der geringen Durchmesser der Längskanäle nicht allzu hoch in diese eindringt.

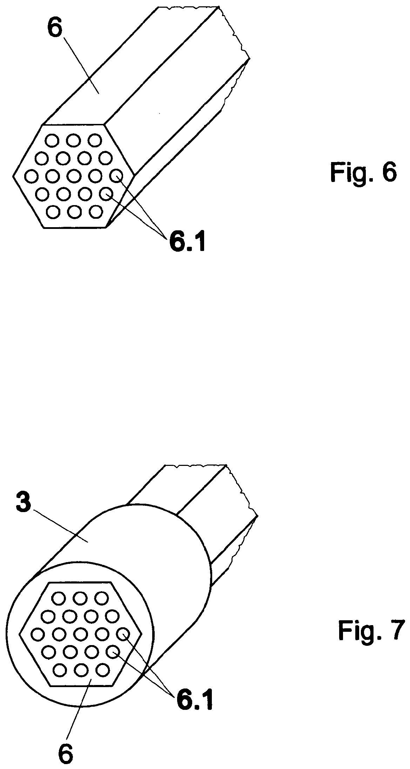

Figur 6 zeigt den Endbereich eines Multikanal-Elementes 6 mit einer Vielzahl von Längskanälen 6.1. Das Element 6 besteht aus Keramik. Es ist im Querschnitt sechseckig. Hier sind auch andere Querschnitte möglich, beispielsweise auch runde oder ovale.

Das Aufbringen von Montageringen erfolgt bei dem Multikanal-Element genauso wie bei dem Spaghetti-Element. Siehe die Figuren 4 und 5. Dabei geht es jedoch einzig und allein um das Aufbringen des Montageringes 3. Hingegen geht es nicht mehr um das Ausfüllen von Hohlräumen analog der Hohlräume 1.2 bei dem in Figur 2 gezeigten Bündel.

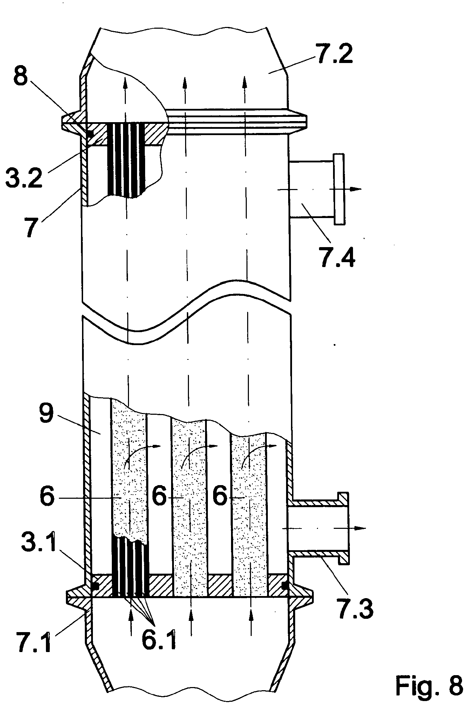

Die Montageringe 3 sitzen in jedem Falle fest auf dem Spaghetti-Bündel beziehungsweise auf dem Monokanal-Element. Nunmehr muss eine Vereinigung mit einem Gehäuse hergestellt werden. Die fertige Filtervorrichtung sieht man in Figur 8. Hierbei sind mehrere Multikanal-Elemente 6 von einem Gehäuse 7 umschlossen. Statt der Multikanal-Elemente 6 könnten auch Spaghetti-Elemente vorgesehen sein.

Das Gehäuse 7 besteht bei der gezeigten Ausführungsform aus einem thermoplastischen Material. Dabei handelt es sich um dasselbe Material, aus dem der Tragring 3 besteht. Gehäuse 7 und Tragring 3 sind in einem einzigen Gussvorgang hergestellt und somit einteilig. Dies gilt jedenfalls für den unteren Montagering 3.1, der gewissermaßen den Boden des Gehäuses 7 bildet. Es gilt jedoch nicht für den oberen Montagering 3.2. Zwischen diesem und dem oberen Ende des Gehäuses befindet sich eine Fuge, so dass eine axiale Relativbewegung zwischen dem oberen Montagering 3.2 und dem Gehäuse 7 möglich ist. Damit ist auch sichergestellt, dass sich das Gehäuse 7 während des Betriebes der Filtervorrichtung in einem unterschiedlichen Maße ausdehnen kann, als die vom Gehäuse umschlossenen Bauteile, nämlich die Multikanal-Elemente 6.

An dieser Stelle ist aber auch eine Dichtung notwendig. Siehe den O-Ring 8. Dieser ist in den Außenumfang des oberen Montageringes 3.2 eingelassen. Er kann bereits beim Gießvorgang des Montageringes 3.2 in diesen eingegossen werden.

Die einzelnen Multikanal-Elemente 6 sind von einem Sammelraum 9 umschlossen.

Das Gehäuse 7 umfasst einen unteren Deckel 7.1 und einen oberen Deckel 7.2. Dem zylindrischen Teil des Gehäuses 7 sind ferner zwei Auslassstutzen angeformt, nämlich ein unterer Auslassstutzen 7.3 und ein oberer Auslassstutzen 7.4.

Die Filtervorrichtung gemäß Figur 8 arbeitet wie folgt: Durch den unteren Deckel 7.1 strömt zu filterndes Medium (Unfiltrat) zu den unteren Stirnseiten der Multikanal-Elemente 6. Dort tritt es in die Längskanäle 6.1 ein, und durchströmt diese. Es tritt sodann aus den oberen Enden der Längskanäle 6.1 aus und gelangt zum oberen Deckel 7.2.

Auf diesem Wege tritt Filtrat quer zur Strömungsrichtung in den Längskanälen 6.1 durch das poröse Keramikmaterial des einzelnen Multikanal-Elementes 6 hindurch und gelangt zum Sammelraum 9. Von dort gelangt es zum unteren Auslass 7.3 sowie zum oberen Auslass 7.4.

In bekannter Weise kann das in den oberen Deckel 7.2 eintretende Unfiltrat im Kreislauf geführt und dabei einer weiteren oder derselben Filtervorrichtung zugeführt werden, wo es weitere Filtrationsvorgänge durchläuft.

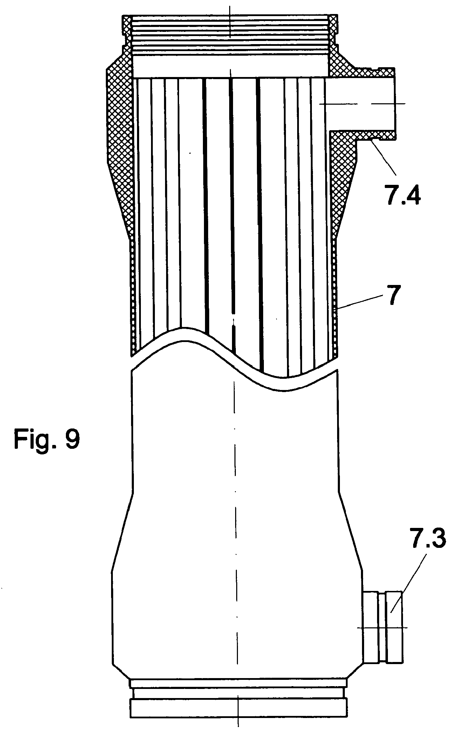

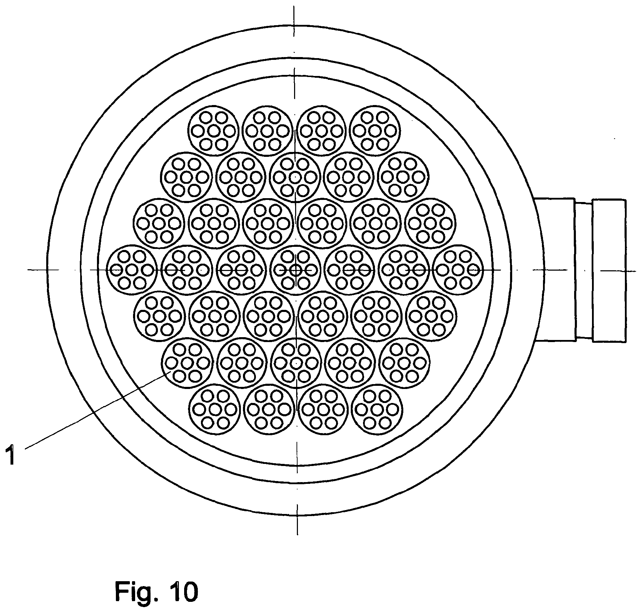

Die in den Figuren 9 und 10 dargestellte Filtrationsvorrichtung weist wiederum ein Gehäuse aus einem thermoplastischen Material auf. Die Filterelemente 1 sind von Spaghetti-Bauart.

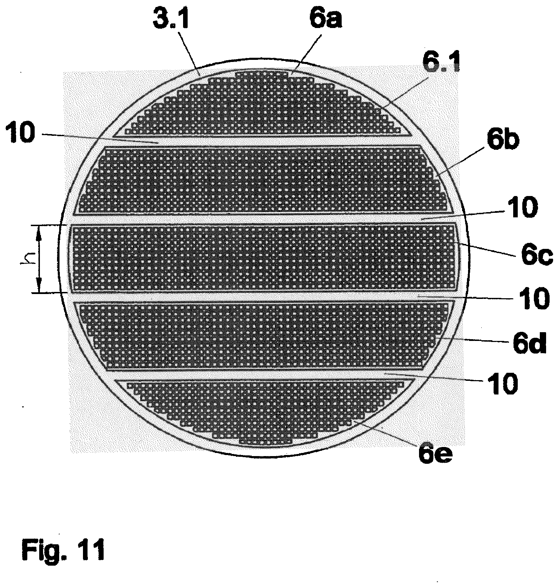

Eine in Figur 11 gezeigte Ausführungsform einer Filtrationsvorrichtung gemäß der Erfindung weist ein in der Figur nicht gezeigtes Gehäuse ähnlich zu jenem der Figuren 9 und 10 auf. Die Multikanal-Elemente sind jedoch nicht rund ("Rohrmembran") sondern in Form von fünf insgesamt flachen Elementen 6a-6e ausgebildet ("Flachmembranen"), zwischen denen flache und breite Zwischenräume 10 vorhanden sind. Dabei sind die Flachmembranen 6a und 6e sowie die Flachmembranen 6b und 6d identisch aufgebaut, jedoch spiegelbildlich zueinander angeordnet. Insgesamt sind die Außenkonturen der Flachmembranen 6a-6e an den Einsatz in das rohrförmige Gehäuse angepasst. Es versteht sich, da bei anderen, nicht gezeigten Ausführungsformen auch eine andere Anzahl von Flachmembranen zum Einsatz kommen kann.

Die Querschnitte der beiden äußeren Flachmembranen 6a und 6e haben die Form klassischer Kreissegmente, die einerseits von einem Kreisbogen und andererseits von einer Kreissehne begrenzt sind. Die inneren Flachmembranen 6b, 6c und 6d werden jeweils von zwei Kreisbögen und zwei Kreissehnen begrenzt. Die Höhe h aller 5 Flachmembranen 6a-6e ist identisch. Sie ist in Figur 11 aus Darstellungsgründen nur für die in Figur 11 obere Flachmembran 6b eingezeichnet. Auch hier versteht sich, dass bei einer nicht gezeigten Ausführungsform auch andere Querschnitte zum Einsatz kommen können, beispielsweise ovale oder auch Freiformquerschnitte. In jeder Flachmembran 6a-6e ist eine Vielzahl von Längskanälen 6.1 vorhanden, von denen in Figur 11 aus Darstellungsgründen nur einer mit einem Bezugszeichen versehen ist. Die Längskanäle 6.1 haben vorliegend in etwa quadratischen Querschnitt, sie können aber auch einen anderen Querschnitt aufweisen.

Herstellung und Material der Ausführungsform gemäß Figur 11 sind identisch zu den vorhergehenden Ausführungsformen. Zunächst werden die Flachmembranen 6a-6e in der gewünschten Art und Weise und im gewünschten Abstand zueinander angeordnet. Dann werden die axialen Enden der Flachmembranen 6a-6e mit einem Kunststoffmaterial vergossen, wie dies beispielhaft im Zusammenhang mit einem anderen Ausführungsbeispiel in den Figuren 4 und 5 gezeigt und unter deren Bezugnahme oben beschrieben ist. Es ergeben sich an den axialen Enden entsprechende Montageringe, wobei in Figur 11 nur der eine endseitige Montagering 3.1 sichtbar ist. Das Kunststoffmaterial ist an den axialen Enden der Flachmembranen 6a-6e auch in den Zwischenräumen 10 vorhanden, wodurch diese zuverlässig und dauerhaft hergestellt sind.

Auch die Funktion entspricht im Wesentlichen jener Funktion, wie sie bereits oben im Zusammenhang mit den Rohrmembranen 6 dargestellt wurde: Während das zu filtrierende Medium durch die Längskanäle 6.1 geleitet wird, wird das Filtrat über die Zwischenräume 10 und den durch den Montagering 3.1 gebildeten Zwischenraum zwischen Gehäuse und den Flachmembranen 6a-6e abgeleitet.

## Patentansprüche

1. Filtermembranmodul, umfassend
eine Mehrzahl einzelner langgestreckter Filterelemente (6a-6e), welche jeweils mehrere Längskanäle (6.1) aufweisen,
ein die Filterelemente (6a-6e) umgebendes rohrförmiges Gehäuse (7),
wobei die Filterelemente (6a-6e) in ihren beiden Endbereichen von einem Kunststoff-Material umgossen sind,
**dadurch gekennzeichnet, dass**
das Kunststoff-Material nach dem Aushärten einen die Mehrzahl von Filterelementen (6a-6e) umschließenden Montagering (3) bildet,
das Gehäuse (7) entweder auf den Montagering (3) aufgeschoben und mit diesem dichtend verbunden oder mit einem der beiden Montageringe einteilig ist durch Herstellen in einem einzigen Gussvorgang,
die Filterelemente als Flachmembranen (6a-6e) ausgebildet sind, zwischen denen Zwischenräume (10) vorhanden sind, wobei das Kunststoff-Material des Montagerings (3) in den beiden Endbereichen auch in den Zwischenräumen (10) vorhanden ist,
die Wandflächen der Längskanäle (6.1) mit einem Filtrationsmaterial derart beschichtet sind, dass das zu filtrierende Medium durch die Längskanäle (6.1) leitbar und das Filtrat über die Zwischenräume (10) und einen durch den Montagering (3.1) zwischen Gehäuse (7) und den Flachmembranen (6a-6e) gebildeten Sammelraum (9) ableitbar ist,
wobei das Filtermembranmodul eine Mehrzahl von Flachmembranen (6a-6e) aufweist, wobei die Mehrzahl von Flachmembranen (6a-6e) zwei äußere Flachmembranen (6a, 6e) und wenigstens drei zwischen den äußeren Flachmembranen angeordnete innere Flachmembranen (6b, 6c, 6d) aufweist, wobei die äußeren Flachmembranen (6a, 6e) die Form von Kreissegmenten aufweisen und von einem Kreisbogen und einer Kreissehne begrenzt werden und wobei die inneren Flachmembranen (6b, 6c, 6d) jeweils von zwei Kreisbögen und zwei Kreissehnen begrenzt werden,
wobei die Flachmembranen spiegelbildlich zueinander angeordnet sind,
wobei die Höhe h aller Flachmembranen (6a-6e) identisch ist, und
wobei die Außenkonturen der Flachmembranen (6a-6e) insgesamt an den Einsatz in dem rohrförmigen Gehäuse (7) angepasst sind.

2. Filtermembranmodul nach Ansprüche 1, **dadurch gekennzeichnet, dass** das Gehäuse (7) aus einem Kunststoff besteht, beispielsweise aus thermoplastischem Kunststoff oder einem Duroplast oder einem Zwei-Komponenten-Kunststoff wie zum Beispiel Epoxid oder Acrylat.

3. Filtermembranmodul nach einem der Ansprüche 1 oder 2, **dadurch gekennzeichnet, dass** das Gehäuse (7) jeweils einen Anschluss für das Unfiltrat sowie für das Filtrat aufweist.

4. Filtermembranmodul nach einem der Ansprüche 1 bis 3, **dadurch gekennzeichnet, dass** an die Montageringe (3.1, 3.2) drei Dichtungselemente angegossen sind.

5. Verfahren zum Herstellen eines Filtermembranmoduls nach einem der vorhergehenden Ansprüche, **dadurch gekennzeichnet, dass** es folgende Schritte umfasst:
Aufbringen einer Schmelze (4) aus Kunststoff,
insbesondere aus einem thermoplastischen Kunststoff,
einem Duroplast oder einem Zwei-Komponenten-Kunststoff,
wie einem Epoxid oder Acrylat, auf den einen Endbereich der Mehrzahl von Filterelementen (6) derart, dass es die Mehrzahl von Filterelementen (6.1) endseitig ummantelt und dabei einen Montagering (3) bildet; Aushärten der Schmelze (4); Verfahren mit dem anderen Ende in gleicher Weise; gegebenenfalls: Aufschieben des Gehäuses (7) über die Montageringe (3.1, 3.2); Abdichten der Montageringe (3.1, 3.2) gegen das Gehäuse (7).

6. Verfahren nach Anspruch 5, **dadurch gekennzeichnet, dass** die Endbereiche der Filterelemente (1) in die Schmelze (4) eingetaucht werden.

7. Verfahren nach einem der Ansprüche 5 oder 6, **dadurch gekennzeichnet, dass** zum Formen der Montageringe (3.1, 3.2) eine Hülse verwendet wird.

8. Verfahren nach einem der Ansprüche 5 bis 7, **dadurch gekennzeichnet, dass** wenigstens die Mantelflächen der Montageringe (3.1, 3.2) mechanisch bearbeitet werden.

9. Verfahren nach einem der Ansprüche 5 bis 8, **dadurch gekennzeichnet, dass** jeweils wenigstens ein Dichtring in die Montage eingegossen wird.

## Claims

1. A filter membrane module, including:
a plurality of individual elongated filter elements (6a-6e), which each have a plurality of longitudinal conduits (6.1),
a tubular housing (7) surrounding the filter elements (6a-6e),
the filter elements (6a-6e) being potted in both of their end regions with a plastic,
**characterised in that**
the plastic forms after hardening a mounting ring (3) surrounding the plurality of filter elements (6a-6e),
either the housing (7) being slipped over the mounting ring (3) and sealingly joined to it or being unitary with one of the two mounting rings by being manufactured in a single potting operation,
the filter elements being formed as flat membranes (6a-6e), between which interstices (10) are provided, the plastic of the mounting ring (3) in both end regions also being provided in the interstices (10),
the wall surfaces of the longitudinal conduits (6.1) are coated with a filtration material such that the medium to be filtrated can be conducted through the longitudinal conduits (6.1) and the filtered medium can be discharged through the interstices (10) and a collecting space (9) which is formed by means of the mounting ring (3.1) between housing (7) and the flat membranes (6a-6e),
the filter membrane module having a plurality of flat membranes (6a-6e), the plurality of flat membranes (6a-6e) having two outer flat membranes (6a, 6e) and at least three inner flat membranes (6b, 6c, 6d) arranged between the outer flat membranes, the outer flat membranes (6a, 6e) having the shape of circle segments and being delimited by an arc and a chord and the inner flat membranes (6b, 6c, 6d) each being delimited by two arcs and two chords,
the flat membranes being arranged in mirror image to one another,
the height h of all the flat membranes (6a-6e) being identical, and
the outer contours of the flat membranes (6a-6e) being adapted as a whole for use in the tubular housing (7).

2. The filter membrane module according to claim 1, **characterised in that** the housing (7) is made of a plastic, for instance thermoplastic, a thermoset plastic or a dual-component plastic, such as epoxy or acrylate.

3. The filter membrane module according to one of claims 1 or 2, **characterised in that** the housing (7) has one connection each for the unfiltrate and for the filtrate.

4. The filter membrane module according to one of claims 1 to 3, **characterised in that** three sealing elements are potted integrally with the mounting rings (3.1, 3.2).

5. A method for producing a filter membrane module according to one of the preceding claims, **characterised in that** the method comprises the following steps: applying a potting material (4) of plastic, in particular a thermoplastic, a thermoset plastic or a dual-component plastic such as an epoxy or acrylate, to one end region of the plurality of filter elements (6) such that it sheathes the plurality of filter elements (6.1) on their ends and thereby forms a mounting ring (3); hardening the potting material (4); doing the same to the other end; if necessary: slipping the housing (7) over the mounting rings (3.1, 3.2); sealing off the mounting rings (3.1, 3.2) from the housing (7).

6. The method according to claim 5, **characterised in that** the end regions of the filter elements (1) are dipped into the potting material (4).

7. The method according to one of claims 5 and 6, **characterised in that** a sleeve is used for forming the mounting rings (3.1, 3.2).

8. The method according to one of claims 5 to 7, **characterised in that** at least the jacket faces of the mounting rings (3.1, 3.2) are mechanically machined.

9. The method according to one of claims 5 to 8, **characterised in that** at least one sealing ring each is potted integrally into the mounting.

## Revendications

1. Module à membrane de filtration, comprenant :
une pluralité d'éléments filtrants individuels allongés (6a-6e) ayant chacun plusieurs canaux longitudinaux (6.1),
un logement de forme tubulaire (7) entourant les éléments filtrants (6a-6e),
dans lequel les éléments filtrants (6a-6e) sont surmoulés d'une matière plastique au niveau de leurs deux zones d'extrémité,
**caractérisé en ce que**
la matière plastique, après durcissement, forme une bague de montage (3) entourant l'un de la pluralité d'éléments filtrants (6a-6e),
le logement (7) est enfilé sur la bague de montage (3) et relié à celle-ci de manière étanche, ou est d'un seul tenant avec l'une des bagues de montage par fabrication via un processus de moulage unique,
les éléments filtrants sont formés sous la forme de membranes plates (6a-6e) entre lesquelles un interstice (10) est agencé, dans lequel la matière plastique de la bague de montage (3) dans les deux zones d'extrémité est également agencée dans l'interstice (10), les surfaces de paroi des canaux longitudinaux (6.1) sont telles qu'elles sont recouvertes d'un matériau de filtration, **en ce que** le milieu à filtrer est entraîné à travers les canaux longitudinaux (6.1), et le filtrat peut être évacué à travers la bague de montage (3.1) via l'interstice (10) et un espace de collecte (9) situé entre le logement (7) et les membranes plates (6a-6e),
dans lequel le module à membrane de filtration présente une pluralité de membranes plates (6a-6e), dans lequel la pluralité de membranes plates (6a-6e) présente deux membranes plates extérieures (6a, 6e) et aux moins trois membranes plates intérieures (6b, 6c, 6d) agencées entre les membranes plates extérieures, dans lequel les membranes plates extérieures (6a, 6e) ont la forme de segments de cercle, et sont délimités par un arc de cercle et une corde de cercle, et dans lequel les membranes plates intérieures (6b, 6c, 6d) sont délimitées chacune par deux arcs de cercle et deux cordes de cercle,
dans lequel les membranes plates sont agencées en image miroir les unes par rapport aux autres,
dans lequel la hauteur h de toutes les membranes plates (6a-6e) est identique, et
dans lequel les contours extérieurs des membranes plates (6a-6e) sont globalement adaptés pour une mise en place dans le logement tubulaire (7).

2. Module à membrane de filtration selon la revendication 1, **caractérisé en ce que** le logement (7) est constitué d'une matière plastique, par exemple une matière plastique thermoplastique ou une matière plastique thermodurcissable ou une matière plastique à deux composants, comme par exemple une résine époxy ou d'acrylate.

3. Module à membrane de filtration selon la revendication 1 ou 2, **caractérisé en ce que** le logement (7) présente respectivement un raccordement pour un fluide non filtré et pour le filtrat.

4. Module à membrane de filtration selon l'une quelconque des revendications 1 à 3, **caractérisé en ce que** trois éléments d'étanchéité sont coulés au niveau des bagues de montage (3.1, 3.2).

5. Procédé de fabrication d'un module à membrane de filtration selon l'une quelconque des revendications précédentes, **caractérisé en ce qu'**il comporte les étapes suivantes consistant à ; appliquer une matière fondue (4) constituée de matière plastique, en particulier d'une matière plastique thermoplastique, d'une matière plastique thermodurcissable ou d'une matière plastique à deux composants, comme une résine époxy ou d'acrylate, sur une première zone d'extrémité de la pluralité d'éléments filtrants (6), de sorte que la pluralité d'éléments filtrants (6.1) sont gainés en extrémité, et former ainsi une bague de montage (3) ; faire durcir la matière fondue (4) ; procéder de la même manière avec l'autre extrémité ; enfiler le logement (7) sur les bagues de montage (3.1 ; 3.2) ; sceller les bagues de montage (3.1 ; 3.2) contre le logement (7).

6. Procédé selon la revendication 5, **caractérisé en ce que** les zones d'extrémité des éléments filtrants (1) sont immergées dans la matières fondue (4).

7. Procédé selon l'une quelconque des revendications 5 ou 6, **caractérisé en ce qu'**une douille est utilisée pour la mise en forme des bagues de montage (3.1, 3.2).

8. Procédé selon l'une quelconque des revendications 5 à 7, **caractérisé en ce qu'**au moins les surfaces périphériques des bagues de montage (3.1, 3.2) sont traitées mécaniquement.

9. Procédé selon l'une quelconque des revendications 5 à 8, **caractérisé en ce qu'**au moins une bague d'étanchéité est coulée dans chaque montage.
